# EUROPÄISCHE PATENTANMELDUNG

(11) **EP 3 072 636 A1**
(43) Veröffentlichungstag der Anmeldung: **28.09.2016**
(21) Anmeldenummer: 16159941.0
(22) Anmeldetag: 11.03.2016
(51) Int. Cl.: B23Q 7/00, B24B 41/00, B24B 9/04, B65G 37/00

(54) **VORRICHTUNG ZUR ZUFÜHRUNG EINER MEHRZAHL VON PROFILROHREN GLEICHER LÄNGE ZU EINER ENTGRATEINRICHTUNG**

(30) Priorität: 25.03.2015 DE 102015104463
(71) Anmelder: RSA cutting systems GmbH, 58239 Schwerte (DE)
(72) Erfinder: Berg, Thomas, 44149 Dortmund (DE); Feldhoff, Stephan, 51709 Marienheide (DE)
(74) Vertreter: Ostriga Sonnet Wirths & Vorwerk

(57) **Zusammenfassung**

Dargestellt und beschrieben ist eine Vorrichtung zur Zuführung einer Mehrzahl von Profilrohren gleicher Länge zu einer nachfolgenden Bearbeitungsmaschine, mit einer zumindest oberseitig und unterseitig Führungen für die Profile aufweisenden Bewegungsbahn, wobei die Bewegungsbahn für die Profile durch ein beweglich angeordnetes Sperrelement verschließbar ist.

Die Aufgabe der Erfindung besteht darin, eine neue Einrichtung zur Zuführung von auf eine einheitliche Länge zugeschnittenen Profilen zu einer nachfolgenden Bearbeitungsmaschine zu schaffen, bei der Profile unterschiedlichen Durchmessers definiert und störungsfrei in allen Betriebszuständen der Entgratmaschine zugeführt werden können.

Die Aufgabe wird dadurch gelöst, dass als Vorrichtung zur Zuführung der Profilrohre parallel zur Bewegungsbahn zwei im Wesentlichen entsprechend der Profillänge beabstandete, synchron zueinander bewegte Bürstbänder angeordnet sind, welche im rechten Winkel zur Profillängsachse verlaufen und zwischen denen die Profile transportiert werden

## Beschreibung

Die Erfindung betrifft eine Vorrichtung zur Zuführung einer Mehrzahl von Profilrohren gleicher Länge zu einer nachfolgenden Bearbeitungsmaschine, mit einer zumindest oberseitig und unterseitig Führungen für die Profile aufweisenden Bewegungsbahn, wobei die Bewegungsbahn für die Profile durch ein beweglich angeordnetes Sperrelement verschließbar ist.

Aus dem druckschriftlich nicht nachweisbaren Stand der Technik ist eine Vorrichtung zur Zuführung von in einer Sägevorrichtung auf gleiche Länge geschnittenen Profilrohren zu einer Entgratmaschine mittels zweier gegenüberliegender geneigter Führungen zur Aufnahme der Profilrohrenden bekannt. In diesen geneigten Führungen können die Profile unter Einwirkung der Schwerkraft sich in Richtung der Entgratmaschine bis hin zu einem am Umfang jeweils der Transportscheiben angeordneten Sperrelement bewegen. Vor dem Sperrelement stauen sich die Profilrohre auf, wobei immer ein Profil bei geöffnetem Sperrelement in einen Aufnahmespalt der Transportscheibe gelangt.

Während die Zuführung von Profilen mit größerem Durchmesser und damit auch mit höherem Gewicht mit der geschilderten Vorrichtung nach dem Stand der Technik sehr zuverlässig funktioniert, entstehen immer wieder Probleme im Zusammenhang mit Profilabschnitten, die nur einen geringen Durchmesser und damit auch geringes Gewicht aufweisen.

Konkret besteht das Problem darin, dass diese relativ leichten Profile sich zwischen der oberseitigen und der unterseitigen Führung verklemmen, so dass kein lückenloser "Stau" der Profile vor dem Sperrelement entsteht. Hierdurch kommt es immer wieder zu Betriebsstörungen.

Des Weiteren kann es vor Betriebsbeginn der Entgratmaschine bei Profilen mit geringem Durchmesser beim Stand der Technik Probleme geben, weil eine größere Anzahl von Profilen zunächst manuell in die geneigte Führungen eingeführt werden müssen, damit sich die Profile bis auf eine betrieblich notwendige Höhe eines optischen Sensors (Lichtschranke) aufstauen können.

Letztlich ergeben sich auch Nachteile beim Stand der Technik im Zusammenhang mit der Beendigung des Entgratvorgangs einer Anzahl von Profilen mit gleicher Länge und geringem Durchmesser dadurch, dass bei Anordnung nur noch weniger Profile mit geringem Querschnitt in der durch die geneigten Führungen gebildeten Bewegungsbahn aufgrund des geringen verbleibenden Gewichtes das Verhältnis von Hangabtriebskraft zu den Reibkräften so ungünstig wird, dass es zu Verklemmungen kommt, die manuell beseitigt werden müssen.

Darüber hinaus ist aus der DE 199 22 495 A1 eine Werkstückzuführungseinrichtung zu einer Entgratmaschine bekannt, bei der die Transportscheibe in einen mit zahlreiche Profilrohren gefüllten Vorratsbehälter partiell so eingreift, dass jeweils ein einzelnes Profilrohr dem Aufnahmespalt zugeführt wird. Durch die chaotische Lagerung der Profilrohre in diesem Vorratsbehälter kommt es jedoch immer wieder zu Störungen der Zuführung von Profilrohren.

Ausgehend von dem zuletzt genannten Stand der Technik besteht die Aufgabe der Erfindung deshalb darin, eine neue Einrichtung zur Zuführung von auf eine einheitliche Länge zugeschnittenen Profilen zu einer nachfolgenden Bearbeitungsmaschine zu schaffen, bei der Profile unterschiedlichen Durchmessers definiert und störungsfrei in allen Betriebszuständen der Entgratmaschine zugeführt werden können.

Die Lösung der Aufgabe ergibt sich aus den nachfolgenden Merkmalen des Anspruchs 1: Vorrichtung zur Zuführung einer Mehrzahl in einer Sägevorrichtung auf gleicher Länge geschnittener Profilrohre auf einer unterseitigen Führung zu Transportscheiben einer Entgratmaschine, wobei die Transportscheiben am äußeren Umfang zahlreiche Aufnahmespalte für Profilrohre aufweisen und zwischen der Vorrichtung zur Zuführung und den Transportscheiben ein Sperrelement angeordnet ist, mit welchem jeweils nur ein Profilrohr einem Aufnahmespalt zugeführt wird, dadurch gekennzeichnet, dass als Vorrichtung zur Zuführung der Profilrohre parallel zur Bewegungsbahn zwei im Wesentlichen entsprechend der Profillänge beabstandete, synchron zueinander bewegte Bürstbänder angeordnet sind, welche im rechten Winkel zur Profillängsachse verlaufen und zwischen denen die Profile transportiert werden.

Die erfindungsgemäße Vorrichtung hat den wesentlichen Vorteil, dass die meist mit einer Robotergreifeinrichtung am Ende der gegenüberliegenden Bürstbänder zwischen die Bürstbänder positionierten Profile definiert und kontinuierlich in Richtung des Sperrelements transportiert werden können. Hierbei greifen die flexiblen Bürsten stirnseitig in den Querschnitt der Profilrohre ein, so dass jedes Profilrohr zwischen zwei gegenüberliegenden Bürsten der gegenüberliegenden Bürstbänder gehalten ist.

Auf vorteilhafte Weise ist ein Verklemmen der Profilrohre oder ein fehlerhaftes Aufstauen vor dem Sperrelement mit der erfindungsgemäßen Einrichtung ausgeschlossen.

Aus dem heterogenen Stand der Technik ist die DE 196 19 583 A1 bekannt, in der eine Vorrichtung zum Beladen von Transportbehältern mit stabförmigen Werkstücken offenbart ist. Hierbei findet der Transport der Werkstücke zwar auch mittels gegenüberliegender Bürstbänder statt, jedoch dient die Transportvorrichtung nicht zur Vereinzelung der Werkstücke, sondern zur Lagenbildung.

Bei einer vorteilhaften Ausführungsform der Erfindung weisen die Führungen in Bewegungsrichtung der Bürstbänder einen sich verringernden Abstand auf. Bei dieser Vorrichtung ist es möglich, dass nicht nur jeweils ein Profil zwischen die Bürstbänder gesetzt werden kann, sondern auch mehrere Profile, die einerseits aufgrund der Flexibilität der in die Profile eingeführten Bürsten der Bürstbänder und andererseits durch den sich verringernden Abstand der Führungen nach und nach in eine hintereinander angeordnete Position bewegt werden und sich geordnet am Sperrelement aufstauen.

Auf vorteilhafte Weise kann eine derartige Vorrichtung mit einer Greifereinrichtung kombiniert werden, die eine Mehrzahl von Profilen gleichzeitig in der aus zwei beabstandeten Bürstbändern gebildeten Transportvorrichtung positionieren kann.

Bei einer bevorzugten Ausführungsform der Erfindung weisen die Bürstbänder Bürsten aus Polyamidfilamenten auf, die vorzugsweise mit einem Durchmesser von 0,2 mm versehen ist.

Auch ist es möglich, dass die einzelnen Polyamidfilamente gewellt ausgebildet sind. Dies hat den Vorteil, dass sie in Achsrichtung wesentlich flexibler sind, also bei Belastung in Achsrichtung ausweichen können.

Des Weiteren weisen die einzelnen Polyamidfilamente bei einer Ausführungsform der Erfindung eine freie Besatzlänge von 11 mm auf, wodurch sie ausreichend tief in die offenen Stirnenden der Profile hineinragen können und eine sichere Befestigung der Profile zwischen den Bürstbändern gewährleistet ist.

Letztlich dient die Vorrichtung bei einer bevorzugten Ausführungsform dem Transport von Profilen von der Greifereinrichtung zu einer mit Aufnahmespalte versehenen Umfangsfläche einer Transportscheibe einer Entgratmaschine.

Weitere Vorteile der Erfindung ergeben sich aus der Beschreibung eines Ausführungsbeispiels. Es zeigen:
Fig. 1 eine Übersichtszeichnung einer Sägevorrichtung und einer nachgeschalteten Entgratmaschine,
Fig. 2 eine vereinfachte teilweise skizzenhafte Vergrößerung der Darstellung gemäß Fig. 1,
Fig.3 eine vergrößerte Darstellung des in Fig. 2 mit III gekennzeichneten Bereichs,
Fig. 4 eine Schnittdarstellung durch die Entgratmaschine gemäß Schnittlinie IV - IV in Fig. 3 und
Fig. 5 - 7 schematische Darstellungen einer aus gegenüberliegenden Greiferkonturen gebildeten Greiferhand mit einem bzw. drei Profilen unterschiedlichen Durchmessers.

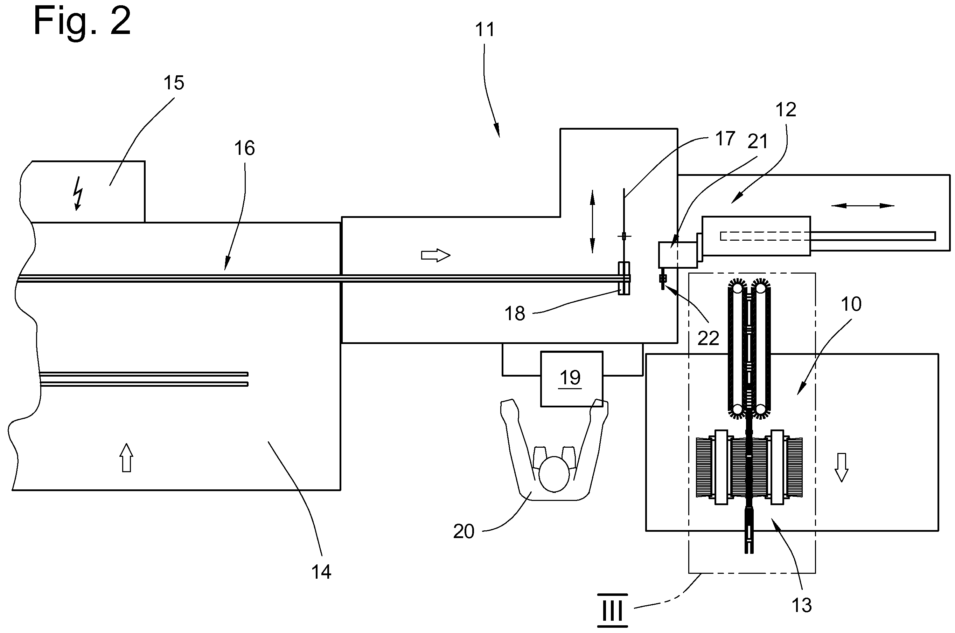

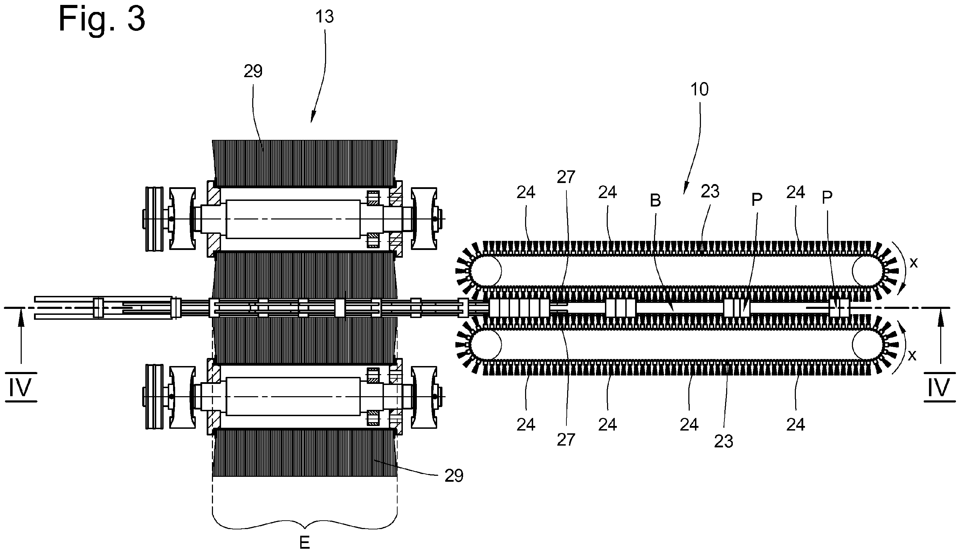

In den Zeichnungen ist eine erfindungsgemäße Vorrichtung zur Zuführung einer Mehrzahl von Profilrohren insgesamt mit der Bezugsziffer 10 bezeichnet (s. Fig. 2 und 3).

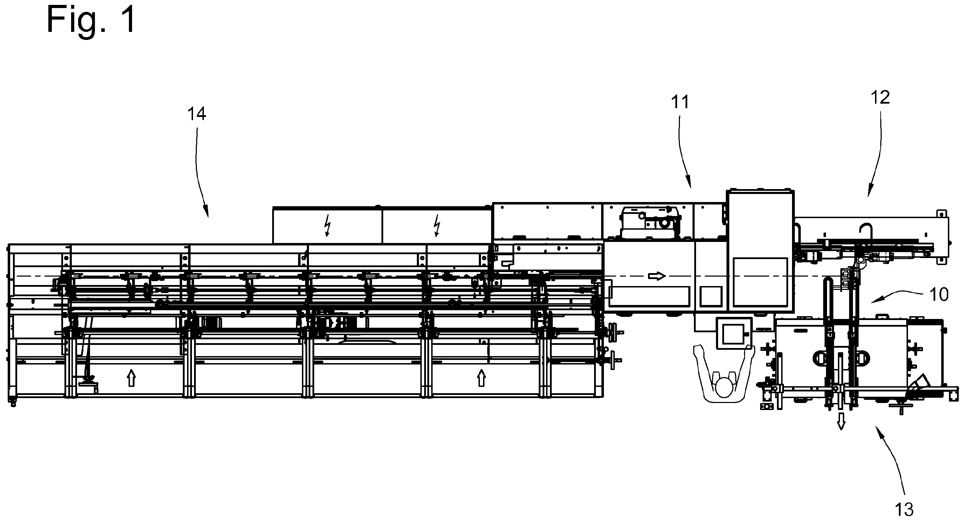

In der Fig. 1 ist eine maschinelle Anordnung bestehend aus einer Sägeeinrichtung 11, die einen vorgeordneten Bundlader 14 aufweist, einer Greifereinrichtung 12 und einer Entgratmaschine 13 dargestellt, wobei zwischen der Greifereinrichtung 12 und der Entgratmaschine 13 die Vorrichtung 10 angeordnet ist.

In der Fig. 2 ist ein mit III gekennzeichneter Bereich der Fig. 1 in vereinfachter skizzierter Form dargestellt.

Dort erkennt man, dass die Sägeeinrichtung 11 aus dem Bundlader 14, einem Schaltschrank 15, einer Zuführungseinrichtung 16 und einer aus Sägeblatt 17 und Spannbacken 18 bestehenden Trenneinrichtung gebildet wird. Darüber hinaus ist nahe der Sägeeinrichtung 11 ein Bedienpult 19 und eine Bedienperson 20 zu erkennen.

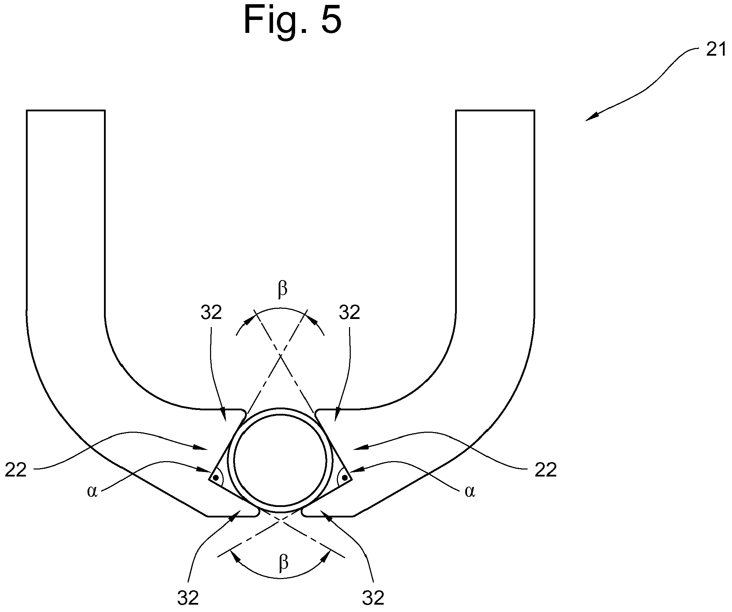

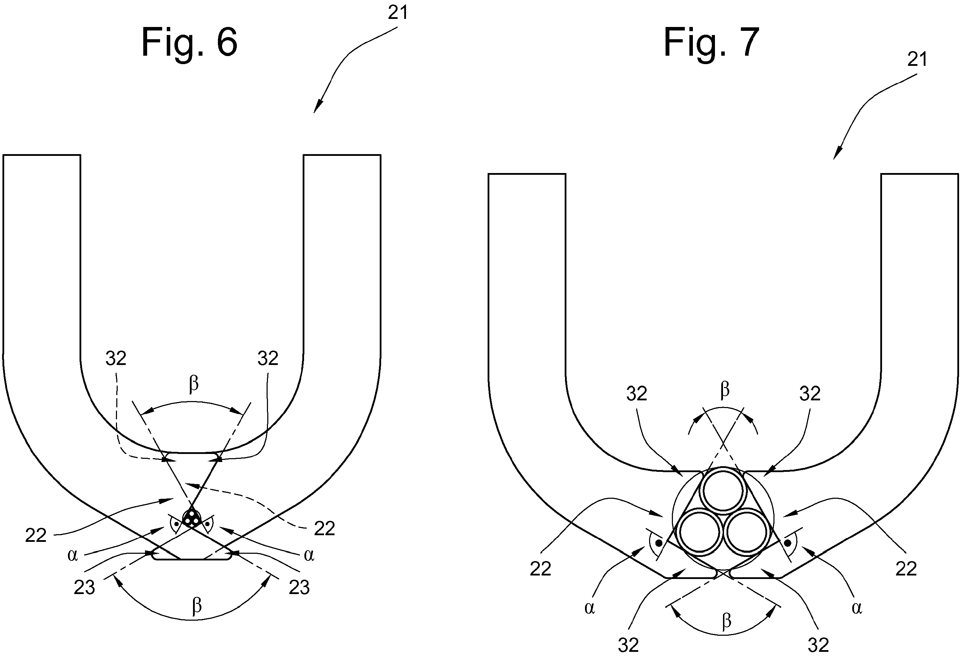

Neben der aus Sägeblatt 17 und Spannbacke 18 bestehenden Trenneinrichtung ist die roboterartige Greifereinrichtung 12 dargestellt, welche aus einem Greiferarm 21 und einer aus zwei Greiferkonturen 22 (s. Fig. 5 - 7) gebildeten Greiferhand gebildet wird. Mit Hilfe der Greiferkonturen 22 werden bis zu drei auf eine gleiche Länge geschnittene Profile P (s. Fig. 3) ergriffen und in Richtung der Vorrichtung 10 bewegt.

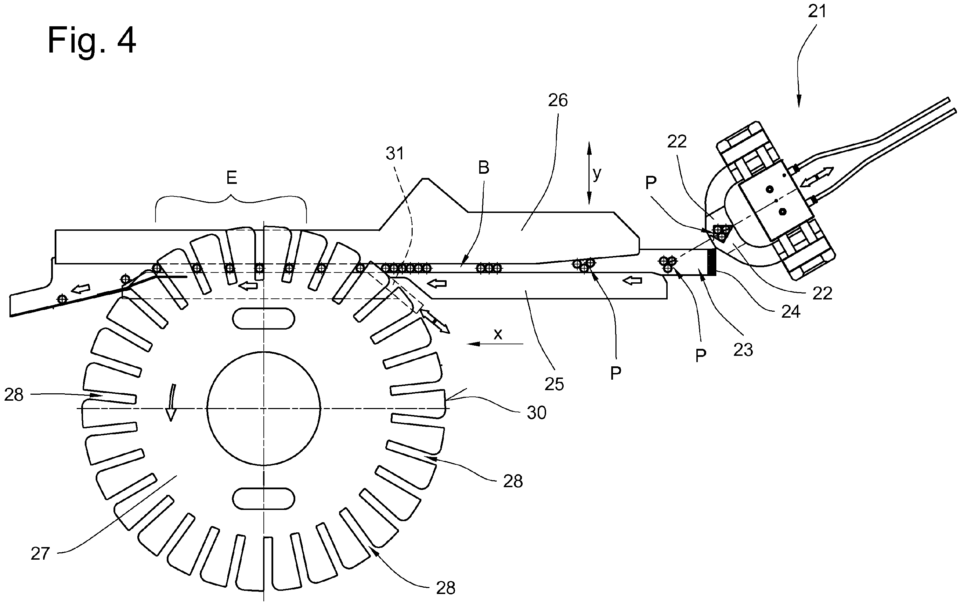

Insbesondere in der Fig. 3, welche eine vergrößerte Darstellung des in Fig. 2 mit III gekennzeichneten Bereichs darstellt, aber auch in der Fig. 4 ist die Vorrichtung 10 und auch die Entgratvorrichtung 13 prinzipiell dargestellt.

In Zusammenschau erkennt man, dass die in den Greiferkonturen 22 (s. Fig. 5 - 7) gehaltenen Profile P zwischen zwei zueinander weisende Bürstbänder 23 positioniert werden, welche antriebsmäßig mit der Entgratmaschine 13 verbunden sind und sich zueinander synchron bewegen. Die Bürstbänder 23 sind außenseitig mit einer Vielzahl von Bürsten 24 versehen, welche aus einzelnen Polyamidfasern gebildet werden, die eine frei Besatzlänge von 11 mm aufweisen.

Insbesondere in der Fig. 4 erkennt man, dass parallel zur Bewegungsrichtung x der Bürstbänder 23 eine untere Führung 25 und eine obere Führung 26 angeordnet sind, die eine Bewegungsbahn B für die Profile P definieren. Je nach Durchmesser der zu entgratenden Profile kann der Abstand der Führung 26 zur Führung 25 vergrößert oder verkleinert werden (vgl. Doppelpfeil y).

Die obere Führung 26 verringert ihren Abstand zur unteren Führung 25 in Bewegungsrichtung x hin zur Entgratmaschine 13. Dadurch wird es bei Mehrfachanlieferungen von drei Profilrohren P durch den Greiferarm 21 erreicht, dass bei Bewegung in x-Richtung nach und nach die Profile P in Anlage an die untere Führung 25 gelangen und dann in einer Linie geordnet an der unteren Führung 25 gelagert sind. Hintergrund hierfür ist die Flexibilität der auf den Bürstbändern 23 angeordneten Bürsten 24, durch die die Position der Profilrohre P auf dem Bürstband 23 mittels Einwirkung der Führungen 25/26 bei der Bewegung in x-Richtung veränderbar ist.

Die vorbeschriebene Vorrichtung 10 dient dem Transport einer Vielzahl von Profilen P gleicher Länge in Bewegungsrichtung x zur ebenfalls in den Fig. 3 und 4 dargestellten Entgratmaschine 13. Grundsätzlich wird die Entgratmaschine 13 einerseits aus zwei auf einer nicht dargestellten Welle angeordneten Transportscheiben 27 gebildet, welche am äußeren Umfang zahlreiche Aufnahmespalte 28 für Profilrohre P aufweisen. Andererseits sind im rechten Winkel zur vorbeschriebenen, der Lagerung der Transportscheiben 27 dienenden Welle Entgratbürsten 29 angeordnet, die der Entgratung der Stirnflächen der Profilrohre P dienen.

Und nun zu den bereits sich in der Vorrichtung 10 befindlichen Profilen P gleicher Länge. Diese werden an einem Umfangsrand 30 der Transportscheiben 27 jeweils durch ein bewegliches Sperrelement 31 aufgestaut, welches in Abhängigkeit von der Drehbewegung der Transportscheibe 27 sich immer dann aus der Bewegungsbahn B der Profile P bewegt, wenn sich ausreichend Profile im Bereich der Bewegungsbahn B der Profile P befinden. In diesem Fall erfasst der Aufnahmespalt 28 der Transportscheibe 27 ein Profil P und bewegt das Profil P durch einen Einwirkungsbereich E der Entgratbürsten 29, wobei der Umfangsrand 30 bis zum Auftauchen des nächsten Aufnahmespaltes 28 eine Weiterbewegung der aufgestauten Profile P verhindert.

Da die obere und die untere Führung 25/26 sich auch im Bereich der Transportscheiben 27 fortsetzt, wird jedes einzelne Profil P, welches in einem Aufnahmespalt 28 angeordnet ist, durch die Drehbewegung der Transportscheibe 27 kontinuierlich zwischen den vorgenannten Führungen 25/26 in x-Richtung fortbewegt, wobei zugleich die außenseitig der Führungen 25/26 bzw. der Transportscheibe 27 angeordneten Entgratbürsten 29 eine kontinuierliche Entgratung der Stirnfläche der Profile P durchführen. Sobald die Profile P den Einwirkungsbereich der Transportscheibe 27 verlassen, werden sie automatisch auch aus den Aufnahmespalten 28 der Transportscheibe 27 herausgeführt und dann einer weiteren nicht dargestellten Transportvorrichtung zugeführt.

In den Fig. 5 - 7 ist in vereinfachter Form jeweils ein Greiferarm 21 mit zwei Greiferkonturen 22 dargestellt, wobei jeweils die Greiferkonturen 22 übereinstimmend sind. Jede einzelne Greiferkontur 22 weist einen rechten Winkel α zwischen Greiferschenkeln 32 auf, wobei die Greiferschenkel 32 unterschiedliche Längen besitzen. Aufgrund dieser Tatsache ergeben sich aus der Verlängerung gegenüberliegender Greiferschenkel 32 der Greiferkonturen 22 jeweils ein Winkel β, welcher am oberen Rand der Greiferhand kleiner 90° und am unteren Rand der Greiferhand größer 90° ist. Diese Art der Konstruktion der Greiferkonturen 22 hat den Vorteil, dass eine definierte Anordnung der Profile P unabhängig von deren Anzahl und unabhängig von deren Durchmessern innerhalb der Greiferhand möglich ist.

### Bezugszeichenliste

- 10: Vorrichtung zur Zuführung einer Mehrzahl von Profilrohren
- 11: Sägeeinrichtung
- 12: Greifereinrichtung
- 13: Entgratmaschine
- 14: Bundlader
- 15: Schaltschrank
- 16: Zuführungseinrichtung
- 17: Sägeblatt
- 18: Spannbacken
- 19: Bedienpult
- 20: Bedienperson
- 21: Greiferarm
- 22: Greiferkonturen
- 23: Bürstbänder
- 24: Bürsten
- 25: untere Führung
- 26: obere Führung
- 27: Transportscheiben
- 28: Aufnahmespalte
- 29: Entgratbürsten
- 30: Umfangsrand
- 31: Sperrelement
- 32: Greiferschenkel
- B: Bewegungsbahn
- E: Einwirkungsbereich der Entgratbürsten 29
- P: Profile
- x: Richtung
- y: Bewegungsrichtung der oberen Führung 26
- α: Winkel
- β: Winkel

## Patentansprüche

1. Vorrichtung (10) zur Zuführung einer Mehrzahl in einer Sägevorrichtung auf gleicher Länge geschnittener Profilrohre (P) auf einer unterseitigen Führung (25) zu Transportscheiben (27) einer Entgratmaschine (13), wobei die Transportscheiben (27) am äußeren Umfang zahlreiche Aufnahmespalte (28) für Profilrohre (P) aufweisen und zwischen der Vorrichtung (10) zur Zuführung und den Transportscheiben (27) ein Sperrelement (31) angeordnet ist, mit welchem jeweils nur ein Profilrohr (P) einem Aufnahmespalt (28) zugeführt wird, **dadurch gekennzeichnet, dass** als Vorrichtung zur Zuführung der Profilrohre (P) parallel zur Bewegungsbahn (B) zwei im Wesentlichen entsprechend der Profillänge beabstandete, synchron zueinander bewegte Bürstbänder (23) angeordnet sind, welche im rechten Winkel zur Profillängsachse verlaufen und zwischen denen die Profile (P) transportiert werden.

2. Vorrichtung (10) nach Anspruch 1, **dadurch gekennzeichnet, dass** die Vorrichtung zusätzlich eine oberseitige Führung (26) aufweist, wobei die Führungen (25, 26) in Bewegungsrichtung der Bürstbänder (23) einen sich verringernden Abstand zueinander aufweisen.

3. Vorrichtung (10) nach Anspruch 1 oder 2, **dadurch gekennzeichnet, dass** eine Mehrzahl von Profilen (P) mittels einer Greifereinrichtung (12) in die aus zwei beabstandeten Bürstbändern (23) gebildete Vorrichtung (10) einsetzbar ist.

4. Vorrichtung (10) nach einem der vorangehenden Ansprüche, **dadurch gekennzeichnet**, die Bürstbänder (23) Bürsten (24) aus PolyamidFilamenten, vorzugsweise mit einem Durchmesser von 0,2 mm, aufweisen.

5. Vorrichtung (10) nach Anspruch 4, **dadurch gekennzeichnet, dass** die Polyamid-Filamente gewellt ausgebildet sind.

6. Vorrichtung (10) nach einem der Ansprüche 4 oder 5, **dadurch gekennzeichnet, dass** die freie Besatzlänge der Polyamid-Filamente ca. 11 mm beträgt.

7. Vorrichtung (10) nach einem der Ansprüche 1 - 3, **dadurch gekennzeichnet, dass** die Bürstbänder (23) Bürsten (24) aus gewelltem Edelstahldraht, vorzugsweise mit einem Durchmesser von 0,2 mm aufweisen.

8. Vorrichtung (10) nach einem der vorangehenden Ansprüche, **dadurch gekennzeichnet, dass** die Vorrichtung (10) dem Transport von Profilen (P) von der Greifereinrichtung (12) zu einer mit Aufnahmespalte (28) versehenen Umfangsrand (30) einer Transportscheibe (27) einer Entgratmaschine dient.
